# EUROPEAN PATENT SPECIFICATION

(11) **EP 1 175 804 B1**
(45) Date of publication and mention of the grant of the patent: **27.12.2006**
(21) Application number: 00931985.6
(22) Date of filing: 28.04.2000
(51) Int. Cl.: H04Q 7/38

(54) **SYSTEM AND METHOD FOR SETTING THE MODE OF OPERATION OF AN ELECTRONIC DEVICE**
SYSTEM UND METHODE FÜR DIE EINSTELLUNG DER BETRIEBSART EINER ELEKTRONISCHEN EINHEIT
SYSTEME ET PROCEDE PERMETTANT DE DEFINIR LE MODE DE FONCTIONNEMENT D'UN DISPOSITIF ÉLECTRONIQUE

(30) Priority: 28.04.1999 US 131867 P
(43) Date of publication of application: 30.01.2002
(73) Proprietor: Sabot Associates, Inc., Weston, MA 02493 (US)
(72) Inventor: SABOT, Gary, Weston, MA 02493 (US)
(74) Representative: Barnfather, Karl Jon
(86) International application number: PCT/US2000/011699
(87) International publication number: WO 2000/065865

(56) References cited:
- EP-A- 0 876 071
- WO-A-98/25433

## Description

### Field of The Invention

This application relates to the field of operation of electronic devices, and more particularly to regulating usage of such devices in accordance with a policy dictating how the devices may operate in a predetermined region of space.

### Background of the Invention

As the use of electronic devices has proliferated, there has arisen situations where usage of the electronic devices has become a nuisance. Cell phones, for example, annoyingly ring during theater performances, or in classrooms. Laptop computers, with their noisy keyboards and sounds may also cause a disturbance. Furthermore, loud music players of all types have prompted city officials to introduce bylaws to prohibit the playing of these devices in subway trains, for example, without the use of a headset. As the average commuter may attest, however, these bylaws may not always be complied. If such bylaws are not obeyed, even less so may be a posting, for example, at the entrance of a theater requesting that cell phones be turned off. Requests of this kind have their limitations. Some persons will not read postings of policies dealing with the use of electronic devices. Others, will simply not comply with the requests, intentionally or inadvertently.

An establishment, such as a theater or school, wishing to curtail the use of electronic devices has few viable options. Jamming of electronic devices may be expensive or prohibited by law. Threats of confiscation of the electronic devices if used within the establishment raise many difficult issues such as the practicability of enforcing such a policy, and the hassles that would accompany such a policy when, for example, an establishment attempts to confiscate an expensive electronic device.

Therefore, there exists a need for effective systems and methods that regulate the usage of an electronic device in designated locations in accordance with a policy.

WO 98/25433 discloses a method and apparatus that enables or disables operation of cellular phones depending only on their location.

EP 0876071 discloses a method and apparatus that determines what type of alerting a wirless handset will receive based on the base station being used by the device.

### Summary of the Invention

The systems and methods described herein address the need for effective systems and methods that regulate the use of electronic devices, such as portable communications devices, in accordance with a usage policy. The policy may set forth an acceptable mode of operation of the electronic devices in a predetermined region of space, as established by individuals, or organisations wishing to control the use of the electronic devices. For example, an owner of a theatre may want to restrict the use of cell phones by audience members during a performance. The owner may then want to establish a policy outlining the details of the restriction of these cell phones. In this example, the policy may provide details such as whether to permit ringing of cell phones, and, if permitted, the maximum volume at which cell phones may ring. Other details of the policy may include the date and time at which the cell phone may be regulated, and the location where the cell phone may be regulated (e. g., the theatre hall alone, or the foyer and the hall).

In accordance with one embodiment of the invention, a system for defining a mode of operation of a device when the device is within a predetermined region of space is provided herein. The system includes a locator for identifying a position of the device. In one embodiment, the locator of the system may include a global positioning system receiver for determining the position of the device. The locator may also employ triangulation, and/or location fingerprinting to determine the position of the device. The system includes a restrictor for regulating the mode of operation of the device when the position of the device is within the predetermined region of space. The system includes a conveyor to permit the locator to communicate to the restrictor the position of the device. A database may also be provided for storing instructions for setting forth the mode of operation of the device.

In one embodiment, the restrictor of the present invention may regulate, for example, the frequencies of sound, the volume of sound, the frequencies of light, and/or the intensity of light that may be emitted from, or input to the device, when the device is in the predetermined region of space. For example, a restrictor may disable the microphone of a cell phone to prevent a person in a predetermined region of space from talking with another person over the phone. The restrictor may also regulate the range of motion or movement of the device when the device is in such a region of space For example, children's toys, such as a remote control car, may be regulated in their range of motion by disabling movement of the toy, in accordance with the established policy.

Another example of the regulation of the range of motion of devices includes cell phones and pagers whose vibration may be disabled or dampened in the predetermined region of space.

As disclosed above, in one embodiment, the electronic device can be a cell phone that is be regulated with the use of a restrictor. The restrictor may either be integrated into the cell phone, in which case the restrictor and cell phone may be enclosed by a common housing, or spatially positioned away from the cell phone. An example of the latter, where the restrictor may be spatially positioned away from the cell phone, occurs when adapting older phones, which do not come equipped with restrictors for use in accordance with an embodiment of the present invention. To regulate such older cell phones, or other phones not equipped with restrictors, a cell site typically used in connection with cellular phones, may be used. In addition, if the cell phone does not come equipped with a locator, the cell phone may emit an electromagnetic field having a signal strength, such that a locator positioned away from the phone may utilise the signal strength for identifying the position of the device.

In either the case where the phone is equipped with a restrictor, or the other case where it does not, a system for defining a mode of operation of the phone includes a conveyor that transmits information associated with the position of the phone such as by a transmitter. The information transmitted may be in the form of electromagnetic radiation. To receive this radiation, the cell cite may include a receiver of the radiation, and a transmitter of an electromagnetic field. The field may be modified to regulate the cell phone when the position of the cell phone is in the predetermined region of space.

### Brief Description of Drawings

The following figures depict certain illustrative embodiments of the invention in which like reference numerals refer to like elements. These depicted embodiments are to be understood as illustrative of the invention and not as limiting in any way.
Figure 1 illustrates a system for regulating usage of an electronic device in accordance with an embodiment of the present invention.
Figure 2 depicts a system for regulating the usage of a cell phone in accordance with an embodiment of the present invention.
Figure 3 depicts an embodiment of the present invention in which a restrictor, for regulating an electronic device, is attached to a cell phone.
Figure 4 illustrates a system for regulating usage of an electronic device in accordance with another embodiment of the present invention.
Figure 5 depicts an embodiment of the system illustrated in Fig. 4 in which the electronic device is a cell phone.
Figure 6 shows a flowchart indicating the steps involved in setting a policy for regulating the usage of an electronic device according to one embodiment of the present invention.
Figure 7 shows a flowchart indicating more details involved in setting a policy for regulating the usage of an electronic device according to one embodiment of the present invention.

### Detailed Description of the Illustrated Embodiments

To provide an overall understanding of the invention, certain methods, and systems will be discussed with reference to defining a mode of operation of cell phones in regions of space in accordance with a policy set forth by an individual, or group of individuals. However, it will be understood by persons of ordinary skill in the art that the methods, and systems described herein may be modified while still remaining within the scope of the invention. In particular, in addition to phones, other electronic devices from which may emanate light or sound, or which may draw attention to itself by motion, or that requires sound or light to operate, may be regulated in accordance with principles of the present invention.

To curtail unwanted noises or lights, in accordance with a usage policy for a predetermined region of space, it may be desirable to regulate electronic devices, such as laptop computers and cell phones, when these devices are within the predetermined region of space. The policy may include a set of regulations, or codes that prescribe how electronic devices may operate. The policy may refer to these regulations in the abstract, as conceived by a human, or may refer to a computer code, which, for example, when read by a processor, may be implemented by electronic means to regulate the mode of operation of a device. A policy may be part of a method of doing business which proscribes certain modes of operation of electronic devices used by customers of a business. For example, a theater owner may institute a policy limiting the use of cell phones by audience members watching a performance. The instituted policy may either proscribe such cell phones from ringing, or at least limit the volume of the ringing. The policy may also restrict various inputs to the device. To implement such a policy, a restrictor may be provided so as to disable, for instance, the microphone of a cell phone to prevent a person in a predetermined region of space from talking with another person over the phone. (Although prevented from talking, the policy may nonetheless still allow the person to listen to messages.) In one embodiment, the microphone is disabled only if the volume of the voice reaching the microphone is greater than a certain level. This might discourage persons from talking too loudly into a cell phone.

When the electronic device is in the predetermined region of space, the user of the device may be required by the policy to perform some action, or conform to some standard, if the device is to operate. For example, upon entering a theater, a cell phone user may be required to fill out a questionnaire before the cell phone is permitted to operate. When the questionnaire is completed, a representative of the theater, such as the theater owner, may send a signal (perhaps by calling a telephone number and entering an identification code) to the user's cell phone company to indicate that it is permissible for the cell phone to operate within the theater. If the user refuses to fill out the questionnaire, the representative could choose to not send the signal that enables the cell phone. In a different example, the business owner might insist that the cell phone possess an apparatus to enable the location of the cell phone to be determined within some predetermined accuracy. Thus, for the cell phone to operate in a predetermined region of space, such as a theater, the cell phone might be required to possess a global positioning system that provides the position of the phone to within a resolution of a theater seat_length. This may allow the theater owner to monitor which seats are occupied during a performance.

The policy may be mandated not only by an individual, such as a theater owner, but also by groups of individuals, or institutions. For example, government officials in compliance with laws of a city, state/province, or country may desire to regulate electronic devices, such as when federal law prohibits the use of unauthorized communication devices in sensitive regions for national security reasons. A policy may dictate various terms of the regulation of the electronic devices. The policy may also be dynamic resulting in regulations of the electronic device that change over time. Furthermore, the predetermined region of space in which the policy is enforced need not be predetermined in the sense that the region may be predefined, or predicted *a priori.* Instead, a predetermined region may include a region which, although incapable of being predefined, is specified by a deterministic algorithm. For example, the specification of a region of space may involve an algorithm based on the behavior of theater patrons, such as "if more than fifty persons attend a performance, then the region of space includes the theater foyer, otherwise it does not."

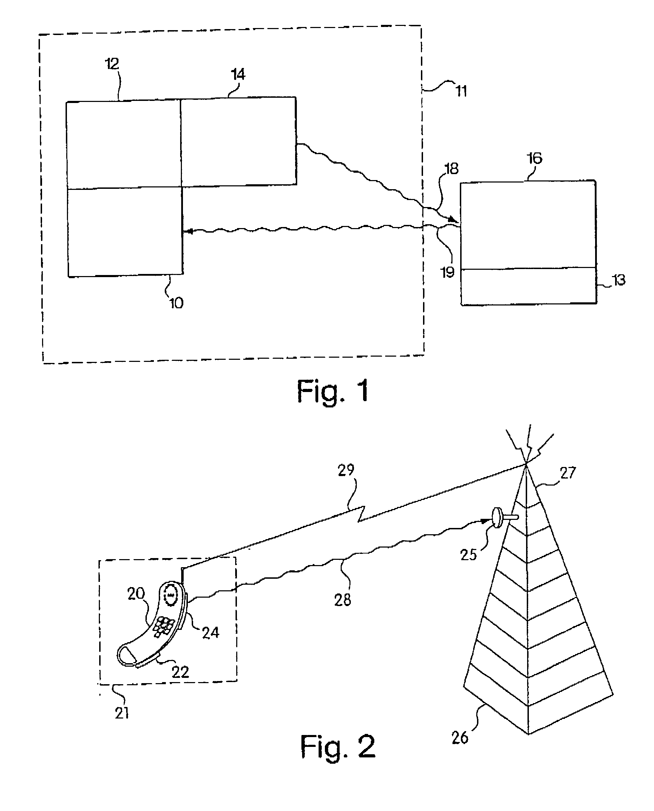

Referring now to Fig. 1, a system is illustrated for defining a mode of operation of an electronic device in accordance with an embodiment of the present invention. The electronic device 10 may be any electronic object, such as that which emits sound or light, or which may draw attention to itself by motion, or that requires sound or light to operate. Examples include a cell phone, which may both emit sound and require sound (i.e., voice), or a laptop computer. Another example may be a toy that normally may be capable of unfettered motion, such as a remotely operated model car. The device, in one embodiment, may include a locator 12, for identifying a position of the device 10. The device 10 may also include a conveyor 14, for conveying information 18 pertaining to the position of the device 10. The position information 18 may be transmitted by the conveyor 14 to a restrictor 16. The restrictor 16 may regulate the operation of the device 10 when the position of the device 10 is within a predetermined region of space 11. The restrictor 16, in one embodiment, may be governed by a policy setting forth the mode of operation of the device 10. The policy, as provided, may be set forth, for example, by the owner of a region of space 11. To regulate the electronic device 10, a signal 19 may be transmitted from the restrictor 16 to the device 10. The signal 19 may contain information which may be interpreted by the device 10 to help set forth a mode of operation of the device 10 in the region of space 11.

Still referring to Fig. 1, the locator 12 may be any apparatus that helps to determine the position of the electronic device 10. In one embodiment, a global positioning system (GPS) may be used to find such a position. The particular GPS locator 12 that may be used depends on the accuracy required to enforce the policy. If the region of space 11 in which policy regulates use is relatively small, a small restaurant for example, then a more accurate GPS locator 12 may be employed. As known to those in the art, an accuracy of approximately 5-10 meters may be achieved by using a GPS locator 12 with a differential beacon receiver to correct for selective availability. In one embodiment, GARMIN's GBR 21^{™} GPS locator, a commercially available product, may be adapted by those of ordinary skill in the art in connection with the present invention. If less accuracy is required, or if selective availability is not imposed, the differential beacon receiver may be unnecessary. In such case, GARMIN's GPS 12^{™} locator, also a commercially available product, may be adapted by those of ordinary skill in the art in connection with the present invention. Server assisted GPS locators may also be used to find the position of the device 10 by placing stationary servers throughout an area of coverage to assist mobile GPS receivers in acquiring signals, as known to those of ordinary skill in the art. SiRF Technologies^{™}, for example, manufactures a postage stamp-sized chipset with built in network assisted DGPS that may be adapted for use in the present invention.

In addition to GPS, other types of locators 12 may be used, so long as they permit determining of the location of the device 10. Examples include locators that utilize signal direction/triangulation (e.g., a locator on the device may receive signals from three fixed remote transmitters, and from the three corresponding signal strengths find the position of the device), signal times of arrival, enhanced signal strength (e.g., the lay of the land, obstructions, and multipath reflection problems, together with the signal strength of several base stations may be used to determine a position of the device), and location fingerprinting (e.g., an area with the problems may be surveyed, and the characteristics of relevant points are mapped; devices may then receive distorted signals whose distortions help identify a position, as occurs with the commercially available product, RadioCamera^{™} of U.S. Wireless Corp.) as described, for example, in H. Koshima and J. Hoshen, *Personal locator services emerge,* IEEE Spectrum 37, 41 (2000), which is incorporated by reference.

Once the position of the electronic device 10 has been determined using the locator 12, a conveyor 14 may be utilized to transmit the position information 18 to the restrictor 16. In one embodiment of the invention, the locator 12 and the restrictor 16 may be connected by electronic circuitry, and both positioned on the device 10. In such an embodiment, the conveyor 14 may include computer instructions and/or a processor for transferring the position information 18 from the locator 12 to a computer memory included in the restrictor 16. In another embodiment, the locator 12 may be positioned away from the restrictor 16, so that, for example, the distance between them may be on the order of a mile. In such an embodiment, the conveyor 14 may include a transmitter of electromagnetic radiation, and may transmit the position information 18 to a receiver (not shown) in the restrictor 16. In a further embodiment, the locator 12 and restrictor 16 may be connected by communication cables, for instance, such as those that link the Internet. In such an embodiment, the conveyor 14 may include the cables, routers and links to convey information from the locator 12 to the restrictor 16 by methods known to those of ordinary skill in the art.

The restrictor 16, in one embodiment, may include a processor for accessing a database 13 in which may be stored the policy or instructions associated with the mode of operation of the device. The instructions stored in the database 13 may be used for regulating the usage of the electronic device. Furthermore, the restrictor 16, by using a processor or by other means known to those of ordinary skill in the art, may determine whether the position of the device 10, as conveyed by the conveyor 14 to the restrictor 16, lies within the region of space 11. If the position lies within the region of space 11, the restrictor 16 may then take further action to regulate the device 10. The type of restrictor 16 that may be utilized depends on the type of electronic device whose usage is being regulated according to principles of the present invention.

Referring now to Fig. 2, a system is shown for defining a mode of operation of a cell phone 20. The system includes a cell site 26, which may regulate the phone 20 when the position of the phone 20 lies within the predetermined region of space 21, as prescribed by a policy. To determine the location of the cell phone 20, a locator 22, such as a GPS locator, described above, may be used. Once the locator 22 determines the position of the cell phone 20, a transmitter of radiation 24 may be used to transmit the position information 28 to the cell cite 26 via electromagnetic radiation. The cell cite 26 may include a receiver 25 for receiving the position information 28 via the electromagnetic radiation. In addition, the cell site 26 may include a transmitter of an electromagnetic field 27 to help regulate the cell phone 20.

To interpret the position information 28, and to regulate the operation of the cell phone 20 in a manner consistent with a policy, the cell site 26 may include a database (not shown) for storing the instructions associated with the policy, and a processor (not shown) that may be used to process the position information 28, and the instructions. The instructions, which may be written in computer code, associated with the policy may provide details of how (ringing characteristics, volume, etc.), and when (dates, and time, for example) the phone may operate within the region 21. After the processor reads the instructions, the processor may instruct the cell site 26 to transmit a signal 29, which may be an electromagnetic field, to the cell phone 20 to regulate its mode of operation in a manner that is consistent with the policy governing usage of the cell phone 20. To transmit the signal, the transmitter of an electromagnetic field 27 may be employed.

The type of signal 29 may be dictated by the instructions associated with the policy stored in the database (not shown) included in the cell cite 26. For example, the policy may prevent the transmission of an electromagnetic signal from the cell cite 26 to the cell phone 20 that corresponds to non-emergency calls to the cell phone 20. Thus, the policy may allow only certain calls to be placed to the cell phone 20 from telephone operators that deal with emergencies. For example, if person A is trying to reach person B in an emergency while person B's cell phone 20 is inside the region of space 21, person A may first have to contact a telephone operator to place the call. The policy may allow all telephone calls to go through if they originate from such an operator, even if the cell phone 20 lies in the region of space 21.

The database storing instructions to regulate usage of the device 10, and the processor for processing those instructions and the position information 28, need not be located near the transmitter 27. For example, in one embodiment, the database and processor may be located near a database associated with a home location register, which can be a database connected to several cell sites, and which can contain a phone subscriber's profile.

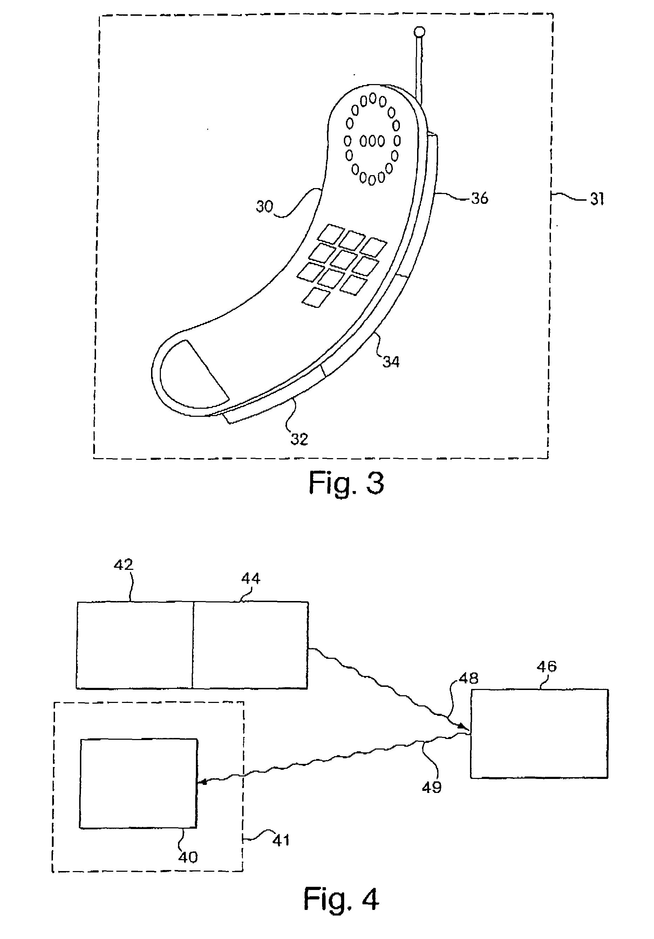

Referring now to Fig. 3, there is shown a cell phone 30 which includes a restrictor 36 thereon. The cell phone 30 may further include a locator 32, which may be a GPS locator, as described above. To permit information on the position of the cell phone 30 to be transmitted from the locator 32 to the restrictor 36, the cell phone 30 is provided with a conveyor 34. The conveyor 34 may include a processor (not shown) together with instructions to input the position from the locator 32 and convey it to the restrictor 34. If the cell phone 30 is located inside a region of space 31 defined by policy, the restrictor 36 may regulate the operation of the cell phone 30. In one embodiment, the restrictor 36 may include a processor and a database in which pertinent details of the policy may be stored. For example, the policy may prescribe that the volume of the ringer of the cell phone 30 be lower than a particular level when the cell phone 30 is located in a particular region of space 31. In another example, the ringer of the cell phone 30 may be prevented from operating, according to the established policy.

It should be appreciated that although a cell phone has been described in connection with one embodiment of the invention, other electronic devices may also be adapted for use in accordance with the principles of the present invention. In one embodiment, for example, the electronic device may be a laptop computer. In such a case, the policy may be provided to reduce the volume of sound emanating from the computer, or the intensity of light emanating from the computer screen.

Referring now to Fig. 4, there is shown, in accordance with an embodiment of the present invention, an electronic device 40 which may not be equipped with a locator, a conveyor, and/or a restrictor of the present invention. Such a device may be an older electronic device that may not have special equipment to regulate usage but which may, nonetheless, be subject to principles of the present invention. To adapt the device 40 for use in accordance with an embodiment of the present invention, a locator 42 may be provided to ascertain the location of the device 40. The locator 42, not necessarily on the device 40, may be used to measure characteristics of electromagnetic waves emitted from the device 40. Generally, the device 40 will emit electromagnetic radiation with characteristics that may be measured by the locator 42 to determine the position of the device 40. The conveyor 44 may also be provided to permit the position of the device 40 to be communicated to a restrictor 46. The restrictor 46, accordingly, may be designed to receive the position information 48 from the conveyor 44. The restrictor 46 may be governed by an established policy, for a defined region of space 41, in which a usage of the electronic device 40 is regulated. A signal 49 may be transmitted to the electronic device 40 resulting in regulated usage in the region of space 41, as described above.

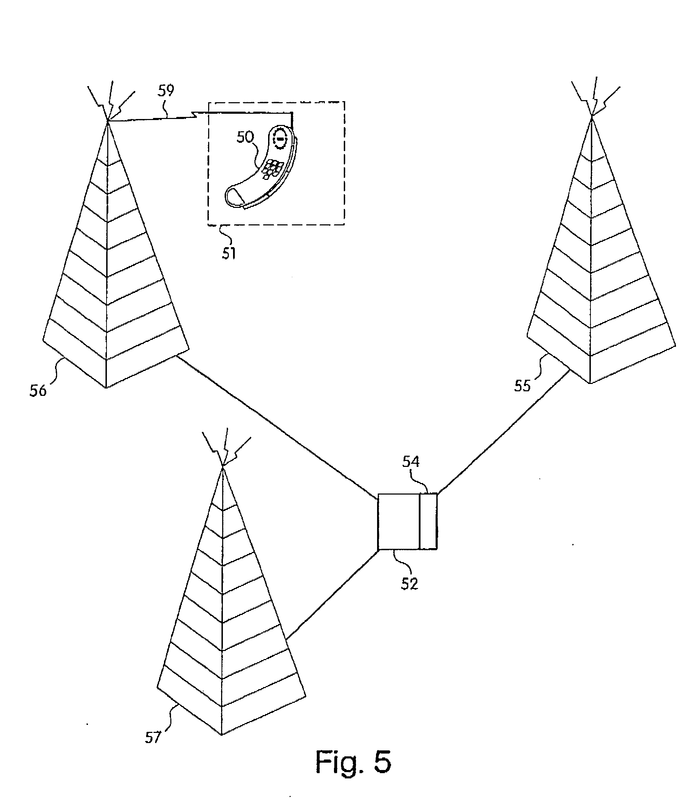

Referring now to Fig. 5, an embodiment of the system illustrated in Fig. 4 is shown in which the electronic device 40 is a cell phone 50. The cell phone 50 may be an older device that may not have special equipment to regulate usage but which may, nonetheless, be subject to principles of the present invention. In an embodiment, a locator 52 may be provided to determine the position of the cell phone 50 using, for instance, triangulation. Specifically, when the cell phone 50 is turned on, it may send a data message, containing identification information, to cell sites 56-58. The signal strength of the data message may be recorded by each of the cell sites 56-58, and passed to a locator 52. The locator 52 may then use the signal strengths from the cell sites 56-58, and the principle of triangulation to compute the position of the cell phone 50. A conveyor 54 may then convey the position information to the cell cite with the strongest signal strength, or that is closest to the cell phone 50, for instance cell site 56. If the position of the cell phone 50 is inside the region of space 51, cell site 56 may modify the radiation that it emits to the cell phone 50 to regulate the usage. For example, the cell site 56 may permit a phone call to last only a certain length of time as may be dictated by the policy, or may prohibit the sending or reception of any regular phone calls. Emergency telephone calls to the cell phone 50, however, may be allowed as discussed above.

Older equipment, such as an older cell phone, that does not include equipment for regulating its use according to policy may nonetheless be regulated using several methods and systems. For example, some or all of the communication and signaling information may be moved out-of-band where older equipment cannot receive it. The movement to out-of-band may be keyed to the older equipment's location, as detected by the cell equipment.

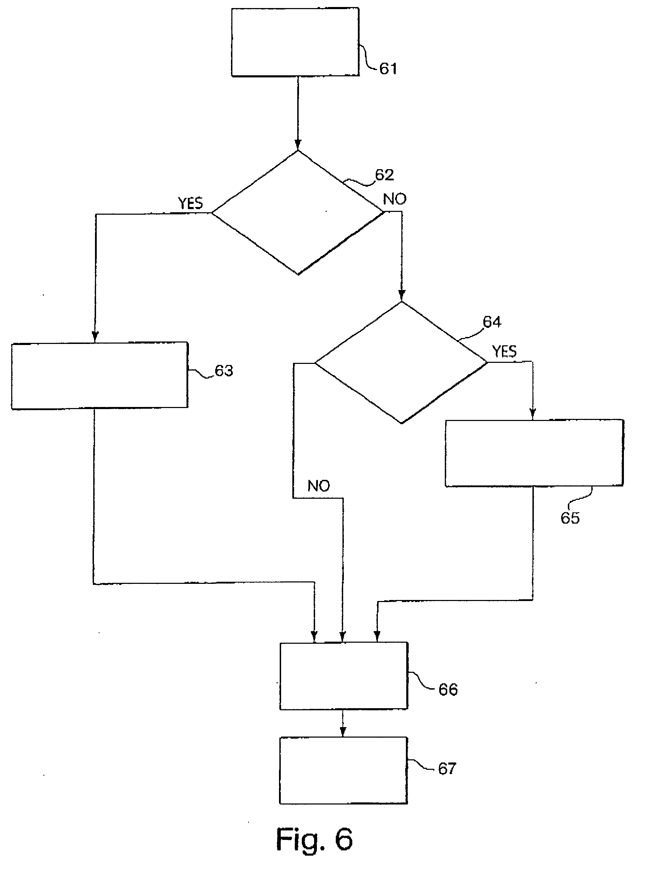

Referring now to Fig. 6, a flowchart is provided illustrating the steps that may be involved in setting a policy for regulating usage of a device according to one embodiment of the present invention. To set the policy in one embodiment, data may be input to a database and processed using a processor included in the restrictor 16. In step 61, the region of space in which the usage of the electronic device is to be regulated is specified. As an example, in step 62, a branch in the flow occurs depending on whether the electronic device emits sound. If sound is emitted, in step 63, the frequency and volume of the sound that may be emitted from the electronic device may be stipulated, and the flow is then transferred to step 66. If no sound is emitted, then step 64 is taken where another branch in the flow occurs depending on whether the electronic device emits light. If light is emitted, in step 65, the frequency and volume of the light that may be emitted from the electronic device may be stipulated, and the flow is then transferred to step 66. If no light is emitted, in step 66, other stipulations of the policy may be provided, before the flow stops at step 67.

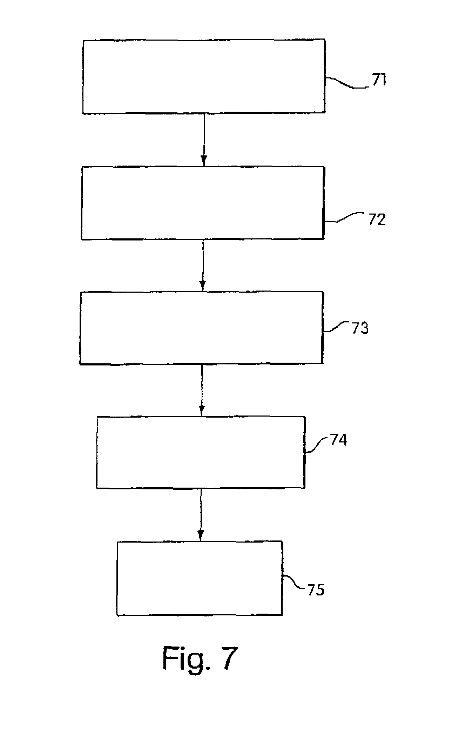

Referring to Fig. 7, a flowchart is provided illustrating the details involved in step 66 for specifying additional modes of operation for the device 10 according to one embodiment of the present invention. For example, in step 71, the time and date during which the usage of the electronic device is to be regulated may be specified. The date and time may be input manually using a processor coupled to the restrictor 16. As an alternative, the policy may also be set automatically in response to various conditions. For example, in one embodiment, one may regulate the device every Wednesday night. The regulations in accordance with the established policy may then be enforced automatically every Wednesday night. In another embodiment, a processor included in the restrictor 16 may access a database having information that may help trigger the enforcement of policy. For example, the database may include daily temperatures, and a policy to regulate usage of the electronic device 10 may become effective automatically if the temperature rises above some specified value. The information in the database accessed by the restrictor 16 may be provided in many ways. In one embodiment, the database may be connected to the Internet, which may then be the source of information that may help trigger the enforcement of policy. Alternatively, the database may be updated directly by a person, who may be responsible for the enforcement of policy. In step 72, a level of privacy of the policy may also be set. For example, the policy may be made accessible to only one person. In another embodiment, the policy may be stored in a database coupled to the restrictor 16 that is accessible to the public via the Internet. In step 73, a list of contact information may be supplied. For example, a policy may be attached to a free text field that contains information such as emergency phone numbers for reaching an establishment that maintains the policy. Thus, if a policy prohibits the use of cell phones in a region of space 11 that is a restaurant, in step 73 the restaurant's telephone number may be provided in case a patron in the restaurant must be reached. In step 74, forwarding pointers may be provided. Such pointers may include Web pointers to additional information including version numbers for the policy, equipment requirements to establish the policy, and policy hours. Information in a policy may be transmitted directly, or elided in favor of a pointer to the information.

A policy may also be set to regulate the usage of electronic devices in other ways. A policy may, for example, prohibit the audible ringing of a cell phone, allow vibration of phones and pagers, prohibit the use of voice communication (independent of ringing) or of text or video displays, prohibit the use of noisy clacking or beeping from a cell phone or laptop keyboards. It may also define circumstances in which the policy may be overridden, perhaps simply by request after the person desiring to violate the policy reads a bit of text explaining the reason for the policy. The policy may also be overridden in an emergency, or by a policy administrator with override privileges. Outgoing emergency calls to 911 might always be allowed. A policy may define who is authorized to do the overriding, when the overriding may occur, and how long a permission to override exists.

Communication equipment that is compatible with the policy may be required to pass along an authentication token or signal in order to operate. For example, when the electronic device is a cell phone, as part of the registration cycle known to those of ordinary skill in the art, an authentication token may have to be provided. When the cell phone is turned on, it may send a data message to the cell site, including a mobile identification number, an electronic serial number, and the authentication token. Without the authentication token indicating that the electronic device comports with the policy, the electronic device may not operate.

The policy may also include the steps to be taken if an attempted communication is rejected. For example, a person making a telephone call to a cell phone that may not be used because of the established policy may receive information to explain why the cell phone did not accept the call (e.g., "The person you are trying to reach is in a restricted area and may not presently be contacted. If this is an emergency,...), or receive a distinctive tone or signal, for example.

An established policy may also include limitations on length or quantity of communication (phone calls cut off after x seconds, n phone calls or data packets allowed in total, or in a given window of time, etc.)

In one embodiment, the instructions for regulating a device that form part of the policy may be transmitted to a cell phone, for example, by electromagnetic radiation. These instructions, which may detail how the restrictor may regulate the phone, may be transmitted to the phone as the phone leaves or enters the predetermined region of space. In one example, the instructions might allow access to a range of communication frequencies. In another example, the instructions may permit the phone to operate normally when the phone is in the predetermined region of space, but only for a period of time. If the region of space is a theater, for instance, the policy may permit the phone to operate normally during intermission. After that period of time, the phone may send a signal to the cell site to request that further instructions, for setting forth the mode of operation of the phone, be sent from the cell cite to the phone.

In another embodiment, the instructions for regulating the device that form part of the policy may be stored in a database that is accessible by members of the public. For example, members of the public trying to reach a cell phone located within a predetermined region of space may want to access the database to learn about the policy for setting forth a mode of operation of the cell phone. In the situation described above, for example, in which a caller receives the message "The person you are trying to reach is in a restricted area and may not presently be contacted," the caller may be allowed to access a database to obtain more information about the policy, perhaps to find out if there is a time when the call can be made. In one embodiment, the caller may access the database by using the Internet.

While the invention has been disclosed in connection with the preferred embodiments shown and described in detail, various modifications and improvements thereon will become readily apparent to those skilled in the art. For example, although systems and methods have been provided for regulating the usage of cell phones, and portable computers in establishments such as theaters and restaurants, it is understood that the usage of any electronic device may be regulated in any region of space, in accordance with a policy. In addition, although examples have been provided herein in which regulating an electronic device includes restricting the device in some way, the principles of the present invention may also be applied to enhance, or widen the functionality of the electronic device in predetermined regions of space.

## Claims

1. A system for defining a mode of operation of a device, the system comprising:
a) a locator for identifying a position of the device;
b) a restrictor having a plurality of restriction policies for operation of devices, the restrictor to receive the position and identify the position as being within a particular one of the specified regions of space, to select a restriction policy associated with the device, and to provide a signal to the device to define the mode of operation of the device based on the selected policy; and
c) a conveyor to communicate the position of the device,
**characterised in that** each policy is associated with technical features of the device and one of a plurality of specified regions of space to which the restrictor provides signals and where the policy associated with the device is selected based on the particular specified region of space and technical features of the device.

2. A system as in claim 1, further comprising a database for storing instructions associated with the mode of operation of the device, the database having associated entries for the plurality of policies, the plurality of specified regions of space and the technical features of the devices.

3. A system as in claim 1, wherein the restrictor controls at least one of a volume of sound, frequencies of sound, intensity of light, frequencies of light emitted from the device, frequencies of light emitted to the device, vibration of the device, and movement of the device.

4. A system as in claim 1, wherein the selected policy changes over time and is associated with at least one of a time, a date, and at least one deterministic algorithm.

5. A system as in claim 1, wherein the locator includes a global positioning system receiver.

6. A system as in claim 1, wherein the locator employs at least one of triangulation and location fingerprinting for identifying the position of the device

7. A system as in claim 1, wherein the device includes a cell phone.

8. A system as in claim 7, wherein the conveyor includes a transmitter of electromagnetic radiation, said radiation including information associated with the position of the cell phone.

9. A system as in claim 8, wherein the restrictor includes a cell cite comprising:
a) a receiver for receiving the electromagnetic radiation including the information; and
b) a transmitter of an electromagnetic field to provide the signal to the cell phone.

10. A system as in claim 7, wherein the cell phone emits an electromagnetic field having a signal strength capable of being utilised by the locator for identifying the position of the device.

11. A method for defining modes of operation of electronically controlled devices, the method comprising:
a) identifying a position of a device;
b) selecting a restriction policy associated with the device from a plurality of restriction policies
c) providing a signal to define the mode of operation of the device; and
c) varying the signal based on the selected policy
**characterised in that** each policy in the plurality of polices is associated with the position of the device and the technical features of the device, and where the restriction policy is selected based on the particular location and technical features of the device so that the signal is varied dependent on the position of the device and technical features of the device.

12. A method as in claim 11, further comprising:
a) determining which one of a plurality of specified regions of space corresponds to the position, each of the specified regions having at least one usage policy for devices therein; and
b) varying the signal based on the at least one usage policy for the corresponding one of the specified regions.

13. A method as in claim 11, wherein providing a signal includes controlling the characteristics of the device, wherein the characteristics include at least one of a volume of sound, frequencies of sound, intensity of light, frequencies of light emitted from the device, frequencies of light emitted to the device, movement of the device, and vibration of the device.

14. A method as in claim 12 wherein the at least one usage policy changes over time and is associated with at least one of: a time, a date, and at least one deterministic algorithm.

15. A method as in claim 11, wherein the step of identifying a position of the device includes using a global positioning system to determine the position.

16. A method as in claim 11, wherein the step of identifying a position of the device includes at least one of triangulation and location fingerprinting.

17. A method as in claim 11, wherein, in the step of identifying, the device is identified as a portable communication device.

18. A method as in claim 11, wherein the step of identifying includes:
a) identifying the device from among a plurality of devices; and
b) selecting a particular usages policy from among a plurality of usage policies based on the characteristics of the device identified.

19. A method as in claim 18, wherein the particular usage policy changes over time.

20. A method as in claim 19, further comprising associating the particular usage policy with at least one of a time, a date, and at least one deterministic algorithm

21. The system of claim 1, wherein the locator, conveyor and device are located within the predetermined region of space.

22. The system of claim 21, wherein the device includes thereon any one of the restrictor, locator or conveyor.

## Patentansprüche

1. System zum Bestimmen eines Funktionsmodus einer Vorrichtung, wobei das System
a) eine Positionsanzeigeeinrichtung zum Identifizieren einer Position der Vorrichtung,
b) eine Einschränkungseinrichtung mit einer Vielzahl von Einschränkungsmethoden für die Funktion der Vorrichtungen, wobei die Einschränkungseinrichtung dazu dient, die Position zu empfangen und die Position dahingehend zu identifizieren, dass sie innerhalb eines Bereiches von spezifizierten Raumbereichen liegt, eine Einschränkmethode auszuwählen, die der Vorrichtung zugeordnet ist, und ein Signal an die Vorrichtung zu liefern, um den Funktionsmodus der Vorrichtung basierend auf der ausgewählten Methode zu bestimmen, und
c) eine Übermittlungseinrichtung zum Mitteilen der Position der Vorrichtung aufweist,
**dadurch gekennzeichnet,**
- **dass** jede Methode den technischen Merkmalen der Vorrichtung und einem Bereich einer Vielzahl von spezifizierten Raumbereichen, dem die Einschränkungseinrichtung Signale liefert, zugeordnet ist, und
- **dass** die der Vorrichtung zugeordnete Methode basierend auf dem speziellen spezifizierten Raumbereich und den technischen Merkmalen der Vorrichtung ausgewählt wird.

2. System nach Anspruch 1, welches weiterhin eine Datenbank zum Speichern von Instruktionen aufweist, die dem Funktionsmodus der Vorrichtung zugeordnet sind, wobei der Datenbank Eingaben für die Vielzahl von Methoden, die Vielzahl von spezifizierten Raumbereichen und die technischen Merkmale der Vorrichtungen zugeordnet sind.

3. System nach Anspruch 1, bei welchem die Einschränkungseinrichtung wenigstens eine Größe bestehend aus Lautstärke, Schallfrequenzen, Lichtstärke, von der Vorrichtung emittierten Lichtfrequenzen, zu der Vorrichtung emittierten Lichtfrequenzen, Vibration der Vorrichtung und Bewegung der Vorrichtung steuert.

4. System nach Anspruch 1, bei welchem sich die ausgewählte Methode mit der Zeit ändert und wenigstens einer Größe, bestehend aus Zeit, einem Datum und wenigstens einem deterministischen Algorithmus zugeordnet ist.

5. System nach Anspruch 1, bei welchem die Positionsanzeigevorrichtung einen Empfänger des Global-Positionier-Systems aufweist.

6. System nach Anspruch 1, bei welchem die Positionsanzeigeeinrichtung wenigstens ein Triangulations- und Lokalisier-Fingerprinting zum Identifizieren der Position der Vorrichtung verwendet.

7. System nach Anspruch 1, bei welchem die Vorrichtung ein Mobiltelefon aufweist.

8. System nach Anspruch 7, bei welchem die Übermittlungseinrichtung einen Sender für elektromagnetische Strahlung aufweist, wobei die Strahlung Informationen enthält, die der Position des Mobiltelefons zugeordnet sind.

9. System nach Anspruch 8, bei welchem die Einschränkungseinrichtung eine Mobilfunkstation mit
a) einem Empfänger zum Empfangen der elektromagnetischen Strahlung mit den Informationen und
b) einem Sender eines elektromagnetischen Feldes, um dem Mobiltelefon das Signal zu liefern, aufweist.

10. System nach Anspruch 7, bei welchem das Mobiltelefon ein elektromagnetisches Feld mit einer Signalstärke emittiert, die in der Lage ist, von der Positionsanzeigeeinrichtung zum Identifizieren der Position der Vorrichtung verwendet zu werden.

11. Verfahren zum Bestimmen von Funktionsmoden elektronisch gesteuerter Vorrichtungen, bei welchem
a) eine Position einer Vorrichtung identifiziert wird,
b) eine Einschränkungsmethode, die der Vorrichtung zugeordnet ist, aus einer Vielzahl von Einschränkungsmethoden ausgewählt wird,
c) ein Signal geliefert wird, um den Funktionsmodus der Vorrichtung zu bestimmen, und
d) das Signal basierend auf der ausgewählten Methode variiert wird,
**dadurch gekennzeichnet,**
- **dass** jede Methode in der Vielzahl von Methoden der Position der Vorrichtung und den technischen Merkmalen der Vorrichtung zugeordnet wird und
- **dass** die Einschränkungsmethode basierend auf der speziellen Position und den technischen Merkmalen der Vorrichtung so ausgewählt wird, dass das Signal abhängig von der Position der Vorrichtung und den technischen Merkmalen der Vorrichtung variiert wird.

12. Verfahren nach Anspruch 11, bei welchem
a) bestimmt wird, welcher Bereich aus einer Vielzahl von spezifizierten Raumbereichen der Position entspricht, wobei jeder der spezifizierten Bereiche wenigstens eine Gebrauchsmethode für die Vorrichtungen in ihm hat, und
b) das Signal basierend auf der wenigstens einen Gebrauchsmethode für den entsprechenden einen Bereich der spezifizierten Bereiche variiert wird.

13. Verfahren nach Anspruch 11, bei welchem zu der Lieferung eines Signals das Steuern der Eigenschaften der Vorrichtungen gehört, wobei die Eigenschaften wenigstens eine Größe aus Lautstärke, Schallfrequenzen, Lichtstärke, aus der Vorrichtung emittierten Lichtfrequenzen, zu der Vorrichtung emittierten Lichtfrequenzen, Bewegung der Vorrichtung und Vibration der Vorrichtung aufweist.

14. Verfahren nach Anspruch 12, bei welchem die wenigstens eine Gebrauchsmethode sich mit der Zeit ändert und wenigstens einer Größe aus Zeit, Datum und wenigstens einem deterministischen Algorithmus zugeordnet wird.

15. Verfahren nach Anspruch 11, bei welchem zu dem Schritt des Identifizierens einer Position der Vorrichtung das Verwenden eines Global-Positionier-Systems für die Bestimmung der Position gehört.

16. Verfahren nach Anspruch 11, bei welchem zu dem Schritt des Identifizierens einer Position der Vorrichtung wenigstens ein Triangulations- und Lokalisier-Fingerprinting gehört.

17. Verfahren nach Anspruch 11, bei welchem bei dem Schritt der Identifizierung die Vorrichtung als tragbare Kommunikationsvorrichtung identifiziert wird.

18. Verfahren nach Anspruch 11, bei welchem der Schritt des Identifizierens
a) das Identifizieren der Vorrichtung aus einer Vielzahl von Vorrichtungen und
b) das Auswählen einer speziellen Gebrauchsmethode aus einer Vielzahl von Gebrauchsmethoden basierend auf den Eigenschaften der identifizierten Vorrichtung aufweist.

19. Verfahren nach Anspruch 18, bei welchem sich die spezielle Gebrauchsmethode mit der Zeit ändert.

20. Verfahren nach Anspruch 19, welches weiterhin das Zuordnen der speziellen Gebrauchsmethode zu wenigstens einer Größe bestehend aus Zeit, Datum und wenigstens einem deterministischem Algorithmus aufweist.

21. System nach Anspruch 1, bei welchem die Positionsanzeigeeinrichtung, die Übermittlungseinrichtung und die Vorrichtung in dem vorgegebenen Raumbereich angeordnet sind.

22. System nach Anspruch 21, bei welchem die Vorrichtung irgendeine Einrichtung von der Einschränkungseinrichtung, der Positionsanzeigeeinrichtung oder der Übermittlungseinrichtung aufweist.

## Revendications

1. Système destiné à définir un mode de fonctionnement d'un dispositif, le système comprenant :
a) un releveur de coordonnées destiné à identifier une position du dispositif ;
b) un dispositif de restriction ayant une pluralité de mesures de restriction pour le fonctionnement des dispositifs, le dispositif de restriction étant destiné à recevoir la position et à identifier la position comme étant à l'intérieur d'une région particulière des régions d'espace spécifiées, à sélectionner une mesure de restriction associée au dispositif, et à fournir un signal au dispositif afin de définir le mode de fonctionnement du dispositif sur la base de la mesure sélectionnée ; et
c) un transporteur destiné à communiquer la position du dispositif,
**caractérisé en ce que** chaque mesure est associée à des caractéristiques techniques du dispositif et l'une parmi une pluralité de régions d'espace spécifiées à laquelle le dispositif de restriction fournit des signaux et dans laquelle la mesure associée au dispositif est sélectionnée sur la base de la région d'espace spécifiée particulière et les caractéristiques techniques du dispositif.

2. Système selon la revendication 1, comprenant en outre une base de données destinée à stocker des instructions associées au mode de fonctionnement du dispositif, la base de données ayant des entrées associées pour la pluralité de mesures, la pluralité de régions d'espace spécifiées et les caractéristiques techniques des dispositifs.

3. Système selon la revendication 1, dans lequel le dispositif de restriction commande au moins un parmi un volume de son, des fréquences de son, une intensité de lumière, des fréquences de lumière émises depuis le dispositif, des fréquences de lumière émises vers le dispositif, une vibration du dispositif, et un mouvement du dispositif.

4. Système selon la revendication 1, dans lequel la mesure sélectionnée change avec le temps et est associée à au moins une parmi une heure, une date et au moins un algorithme déterministe.

5. Système selon la revendication 1, dans lequel le releveur de coordonnées comprend un récepteur GPS.

6. Système selon la revendication 1, dans lequel le releveur de coordonnées emploie au moins une parmi la triangulation et la prise d'empreintes de localisation afin d'identifier la position du dispositif.

7. Système selon la revendication 1, dans lequel le dispositif comprend un téléphone cellulaire.

8. Système selon la revendication 7, dans lequel le transporteur comprend un émetteur de rayonnement électromagnétique, ledit rayonnement comprenant des informations associées à la position du téléphone cellulaire.

9. Système selon la revendication 8, dans lequel le dispositif de restriction comprend un site cellulaire comprenant :
a) un récepteur destiné à recevoir le rayonnement électromagnétique comprenant les informations ; et
b) un émetteur d'un champ électromagnétique afin de fournir le signal au téléphone cellulaire.

10. Système selon la revendication 7, dans lequel le téléphone cellulaire émet un champ électromagnétique ayant une intensité de signal capable d'être utilisée par le releveur de coordonnées afin d'identifier la position du dispositif.

11. Procédé destiné à identifier des modes de fonctionnement de dispositifs commandés de manière électronique, le procédé comprenant :
a) l'identification d'une position d'un dispositif ;
b) la sélection d'une mesure de restriction associée au dispositif parmi une pluralité de mesures de restriction
c) le fait de fournir un signal afin de définir le mode de fonctionnement du dispositif ; et
d) la variation du signal sur la base de la mesure sélectionnée
**caractérisé en ce que** chaque mesure parmi la pluralité de mesures est associée à la position du dispositif et les caractéristiques techniques du dispositif, et dans lequel la mesure de restriction est sélectionnée sur la base de la localisation particulière et des caractéristiques techniques du dispositif de manière à ce que le signal soit varié en fonction de la position du dispositif et des caractéristiques techniques du dispositif.

12. Procédé selon la revendication 11, comprenant en outre :
a) le fait de déterminer laquelle parmi une pluralité de régions d'espace spécifiées correspond à la position, chacune des régions spécifiées ayant au moins une mesure d'usage pour les dispositifs dans celle-ci ; et
b) la variation du signal sur la base de la au moins une mesure d'usage pour la région correspondante des régions spécifiées.

13. Procédé selon la revendication 11, dans lequel le fait de fournir un signal comprend la commande des caractéristiques du dispositif, dans lequel les caractéristiques comprennent au moins un parmi un volume de son, des fréquences de son, une intensité de lumière, des fréquences de lumière émises depuis le dispositif, des fréquences de lumière émises vers le dispositif, un mouvement du dispositif, et une vibration du dispositif.

14. Procédé selon la revendication 12, dans lequel la au moins une mesure d'usage change avec le temps et est associée à au moins une parmi : une heure, une date, et au moins un algorithme déterministe.

15. Procédé selon la revendication 11, dans lequel l'étape consistant à identifier une position du dispositif comprend l'utilisation d'un GPS afin de déterminer la position.

16. Procédé selon la revendication 11, dans lequel l'étape consistant à identifier une position du dispositif comprend au moins l'une parmi la triangulation et la prise d'empreintes de localisation.

17. Procédé selon la revendication 11, dans lequel, au cours de l'étape d'identification, le dispositif est identifié comme étant un dispositif de communication portable.

18. Procédé selon la revendication 11, dans lequel l'étape d'identification comprend :
a) l'identification du dispositif parmi une pluralité de dispositifs ; et
b) la sélection d'une mesure d'usages particulière parmi une pluralité de mesures d'usage sur la base des caractéristiques du dispositif identifié.

19. Procédé selon la revendication 18, dans lequel la mesure d'usage particulière change avec le temps.

20. Procédé selon la revendication 19, comprenant en outre le fait d'associer la mesure d'usage particulière à au moins une parmi une heure, une date, et au moins un algorithme déterministe

21. Système selon la revendication 1, dans lequel le releveur de coordonnées, le transporteur et le dispositif sont situés à l'intérieur de la région d'espace prédéterminée.

22. Système selon la revendication 21, dans lequel le dispositif comprend sur celui-ci l'un quelconque du dispositif de restriction, du releveur de coordonnées ou du transporteur.
